# EUROPEAN PATENT APPLICATION

(11) **EP 3 448 129 A1**
(43) Date of publication of application: **27.02.2019**
(21) Application number: 18190146.3
(22) Date of filing: 22.08.2018
(51) Int. Cl.: H05B 37/02, B64D 47/08, B64F 1/00

(54) **IMAGE LIGHTING ADJUSTMENT BY AIRCRAFT CAMERA SYSTEM**

(30) Priority: 25.08.2017 US 201715687323
(71) Applicant: Rosemount Aerospace Inc., Burnsville, MN 55306-4898 (US)
(72) Inventor: BOER, Jonathan, Lakeville, MN 55044 (US)
(74) Representative: Dehns

(57) **Abstract**

Camera systems of an aircraft include an image sensor configured to capture image data and one or more processors. The one or more processors configured to determine at least one image property of the captured image data; evaluate whether the at least one image property is within an acceptable range; and output, in response to the at least one image property being outside the acceptable range, a lighting command configured to adjust light provided by a lighting system of the aircraft.

## Description

### BACKGROUND

Many aircraft have camera systems to provide input to pilots. Aircraft are often equipped with external lighting systems to provide extra light when ambient light is insufficient to provide an acceptable image. Typically, lighting systems are turned on manually by the aircraft pilot when the pilot determines light is needed. These lights are either on or off, and are not always turned off when no longer needed, sacrificing the usable life of the lights.

### SUMMARY

In one example, a camera system of an aircraft, wherein the aircraft includes a lighting system, the camera system comprises an image sensor configured to capture image data and one or more processors. The one or more processors are configured to determine at least one image property of the captured image data; evaluate whether the at least one image property is within an acceptable range; and output, in response to the at least one image property being outside the acceptable range, a lighting command configured to adjust light provided by the lighting system of the aircraft.

In one example, a method comprises capturing image data using an image sensor of an camera system of an aircraft; determining, by one or more processors of the camera system, at least one image property of the captured image data; evaluating, by the one or more processors, whether the at least one image property is outside an acceptable range; and outputting, in response to determining that the at least one image property is outside the acceptable range, a lighting command configured to adjust light provided by a lighting system of the aircraft.

### BRIEF DESCRIPTION OF THE DRAWINGS

FIG. 1 is a perspective view of an aircraft equipped with cameras mounted at various locations on the aircraft.
FIG. 2A-2B are front plan views of the visual displays of the cameras.
FIG. 3 illustrates a series of visual displays of an camera showing different brightness levels.
FIG. 4 is a block diagram of an camera system and lighting control system of an aircraft.
FIG. 5 is a flow diagram depicting a process for image optimization by an camera system of an aircraft.

### DETAILED DESCRIPTION

Apparatus, systems, and associated methods relate to image optimization using image processing to determine when a light should be adjusted to improve an image captured by a camera. In some applications, such as an aircraft, lights are turned on or off manually by aircraft pilots. Lighting is either on or off, which does not always provide an acceptable image. Lights are not always turned off when no longer needed, causing an unneeded increase in power consumption and shortened lighting equipment life. Using the apparatus, systems, and associated methods herein, allows for the lighting to only be used when necessary, and to adjust the light to provide for increased image quality.

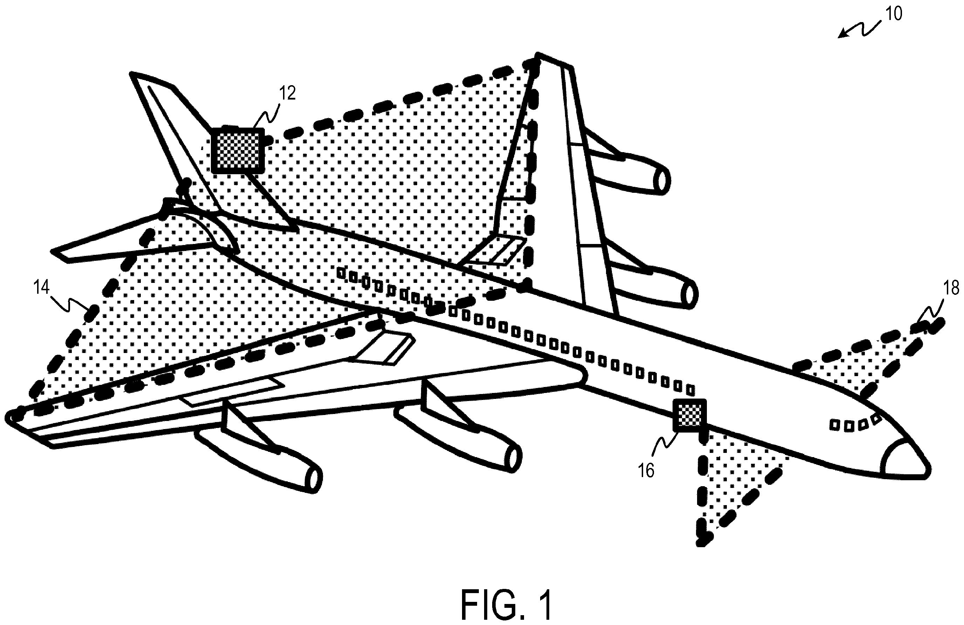

FIG. 1 is a perspective view of aircraft 10 equipped with camera 12 which has a viewable zone 14, and camera 16 which has a viewable zone 18. Camera 12 can capture image data of viewable zone 14. Viewable zone 14 includes the wings, the wheels, and the fuselage of aircraft 10. Camera 16 can capture image data of viewable zone 18. Viewable zone 18 includes the front wheels and fuselage of aircraft 10.

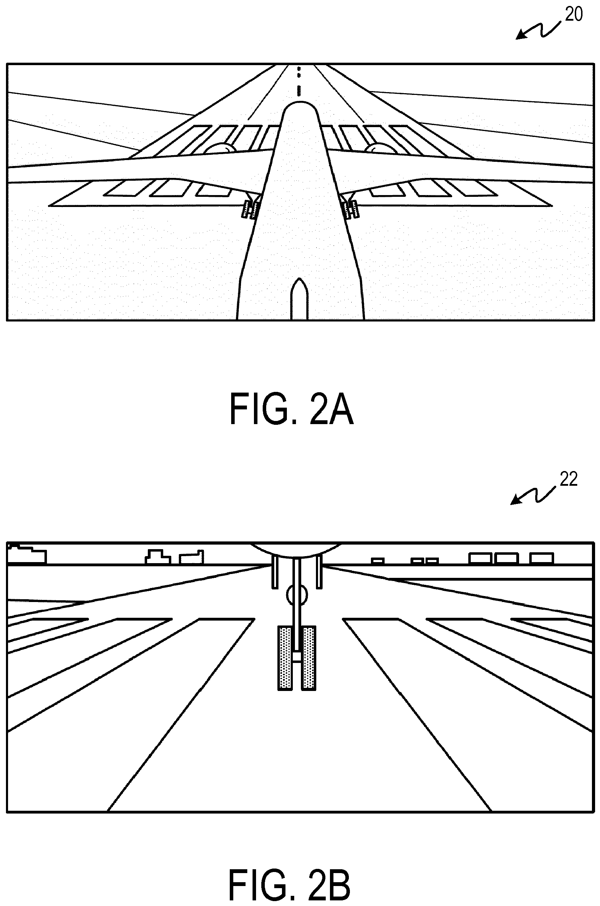

FIG. 2A is a front plan view of visual display 20 from camera 12. As shown, visual display 20 shows a display of viewable zone 14 that includes the rear wheels, the wings, and the fuselage of aircraft 10. The background of visual display 20 shows a runway.

FIG. 2B is a front plan view of visual display 22 from camera 16. As shown, visual display 22 shows a display of viewable zone 18 that includes the front wheels and the fuselage of aircraft 10. The background of visual display 22 shows a runway.

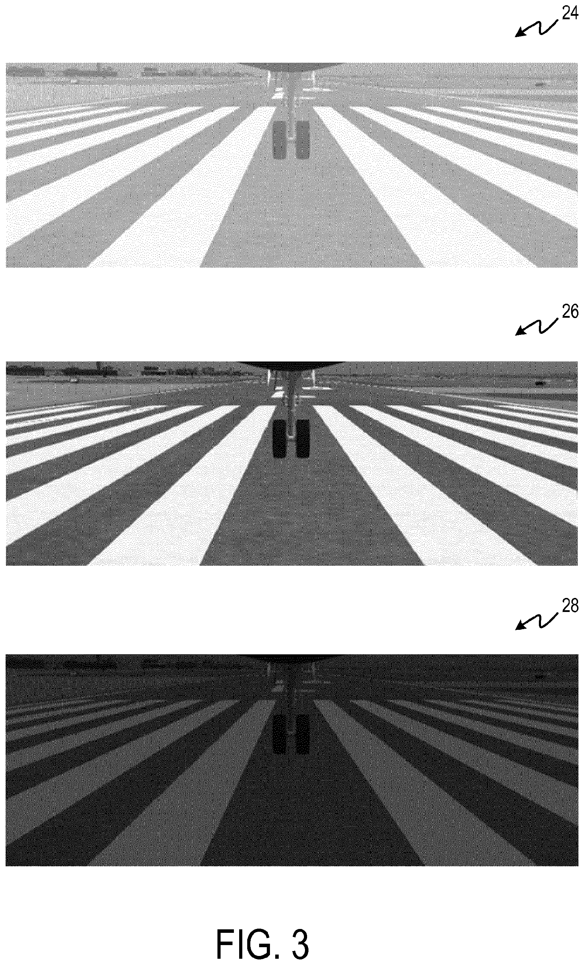

FIG. 3 illustrates a series of visual displays 24, 26, and 28 of camera 16, in which the brightness of each captured image decreases. Visual display 24 shows an image with a brightness that exceeds an acceptable brightness level range. The image is washed out, and details are difficult to see. Excessive brightness can occur when the ambient lighting is too bright, or light provided by a lighting system of the aircraft is too bright for the ambient light conditions. Visual display 26 shows an image with a brightness that falls within an acceptable brightness range. Details in the image are clear and easy to see. Acceptable lighting occurs with ambient lighting conditions that happen to provide for an acceptable image or light provided by the lighting system of the aircraft adjusts the lighting conditions to within an acceptable range. Visual display 28 shows an image with a brightness that falls below an acceptable brightness range. The image is dark and details are difficult to make out. Deficient lighting occurs when ambient lighting is insufficient and the lighting system fails to provide enough light. As can be seen by the images of visual displays 24 and 28, images that are too bright and images that are too dark lack clarity and fail to provide the level of detail an aircraft pilot may need.

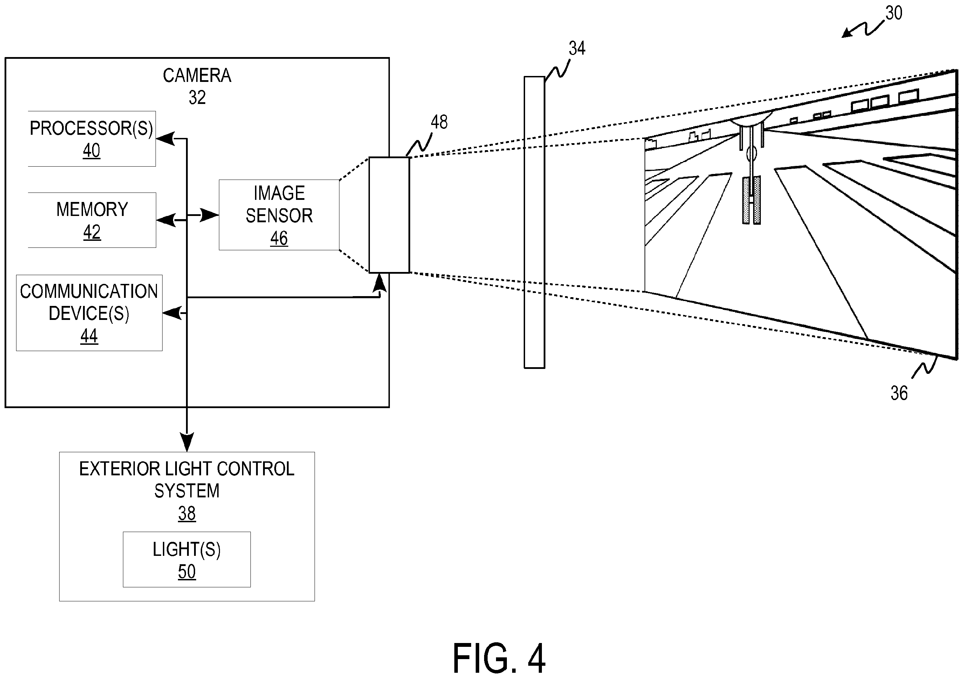

FIG. 4 is a block diagram of camera and light control system 30 including camera system 32, camera window 34, viewable zone 36, and light control system 38 of an aircraft. Camera system 32 includes one or more processors 40, computer-readable memory 42, one or more communication devices 44, image sensor 46, and camera lens 48. Light control system 38 includes one or more lights 50.

Camera window 34 protects camera system 32 from elements and conditions while still providing visual access. Camera lens 48 focuses light from viewable zone 36 so that image sensor 46 can capture image data of viewable zone 36. In some examples, the captured image data is stored in computer-readable memory 42.

As illustrated in FIG. 4, camera system 32 includes one or more processors 40. Processors 40 are configured to implement functionality and/or process instructions for execution within camera system 32. For instance, processors 40 can be capable of processing instructions stored at computer-readable memory 42. Examples of one or more processors 40 include any one or more of a microprocessor, a controller, a digital signal processor (DSP), an application specific integrated circuit (ASIC), a field-programmable gate array (FPGA), or other equivalent discrete or integrated logic circuitry.

One or more processors 40 can determine various image properties of the captured image data including, brightness, contrast, color saturation, white balance and other image data properties. In one example, brightness is determined using a known object in the image. The known object can be a wing, the fuselage, or other part of the aircraft that remains in viewable zone 36. In one example, the brightness is an average brightness of the image data. One or more processors 40 can evaluate whether the brightness of the image data is below a threshold. In response to determining the brightness is below a threshold, one or more processors 40 can output a lighting command. The lighting command can be configured to adjust light provided by light control system 38. The command signal can be received by light control system 38, which will then lower the brightness of, or turn off one or more of lights 50. In response to determining the brightness is above the threshold, one or more processors 40 can output a lighting command. The lighting command can be configured to adjust light provided by light control system 38. The command signal can be received by light control system 38, which will then turn on or increase a brightness of one or more of lights 50.

In one example, white balance of the image data is determined. White balance can be determined using a known object with a known color within the image data. Known objects with a known color include the aircraft fuselage, line markings on a runway, etc. One or more processors 40 can evaluate whether the white balance of the image data is within an acceptable range. In response to determining the white balance outside of the acceptable range, one or more processors can output a lighting command. The lighting command is configured to increase a color temperature of the light when the white balance is less than the acceptable range. The lighting command is configured to decrease a color temperature of the light when the white balance is greater than the acceptable range.

As shown, processors 40 are configured to receive one or more parameters from light control system 38. In one example, processors 40 are configured to receive a parameter indicating the color temperature of the light provided by the lighting system of the aircraft. In response to receiving the parameter, processors 40 are configured to adjust the image sensor based upon the parameter. In one example, adjusting the image sensor includes adjusting a white balance calibration of the image sensor. In another example, processors 40 are configured to receive a first parameter indicating a brightness of the light provided by the lighting system of the aircraft; and a second parameter indicating a brightness range of the light provided by the lighting system of the aircraft. The brightness range is has a lower limit defined by the lowest brightness, while still being on, and an upper limit defined by the highest brightness the lighting system of the aircraft is capable of producing. Processors 40 are configured to adjust the image sensor based on the first parameter. Adjusting the image sensor can include adjusting a gain of the image sensor. Processors 40 are configured to adjust the lighting command based upon the first and second received parameter. Adjusting the lighting command can include adjusting the amount of increase in brightness, changing the lighting command from dimming the light to turning off the light, etc.

Computer-readable memory 42 can be configured to store information within camera system 32 during operation. Computer-readable memory 42, in some examples, is described as a computer-readable storage medium. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, computer-readable memory 42 is a temporary memory, meaning that a primary purpose of computer-readable memory 42 is not long-term storage. Computer-readable memory 42, in some examples, is described as a volatile memory, meaning that computer-readable memory 42 does not maintain stored contents when power to camera system 32 is removed. Examples of volatile memories can include random access memories (RAM), dynamic random access memories (DRAM), static random access memories (SRAM), and other forms of volatile memories. In some examples, computer-readable memory 42 is used to store program instructions for execution by processors 40. Computer-readable memory 42, in certain examples, is used by software applications running on camera system 32 to temporarily store information during program execution, such as determining an image property of at least a portion of an image, or determining the image property is outside of an acceptable range.

Computer-readable memory 42, in some examples, also include one or more computer-readable storage media. Computer-readable memory 42 can be configured to store larger amounts of information than volatile memory. Computer-readable memory 42 can further be configured for long-term storage of information. In some examples, computer-readable memory 42 include non-volatile storage elements. Examples of non-volatile storage elements can include magnetic hard discs, optical discs, floppy discs, flash memories, or forms of electrically programmable memories (EPROM) or electrically erasable and programmable (EEPROM) memories.

Camera system 32, as illustrated in FIG. 4, also includes one or more communication devices 44. Camera system 32, in one example, utilizes communication devices 44 to communicate with external devices via one or more wired or wireless networks, or both. Communication devices 44 can include a network interface card, such as an Ethernet card, an optical transceiver, a radio frequency transceiver, or any other type of device that can send and receive information. Other examples of such network interfaces can include Bluetooth, 3G, 4G, and WiFi radio computing devices, as well as Universal Serial Bus (USB).

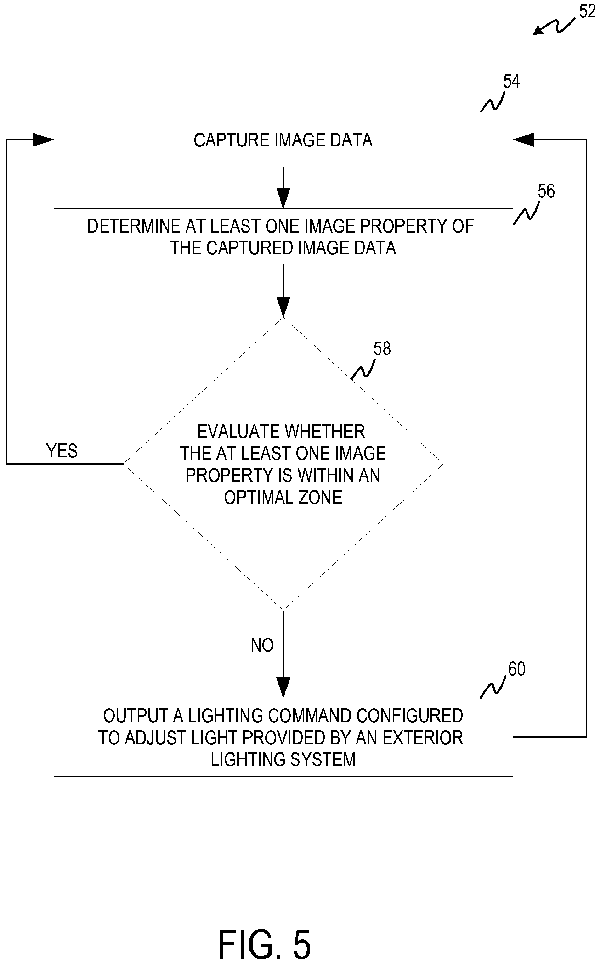

FIG. 5 is flow diagram depicting a process 52 for image lighting optimization by an camera system of an aircraft. For purposes of clarity and ease of discussion, the example operations are described below within the context of camera system 32 of FIG. 4.

At step 54, image data is captured using image sensor 46. In some examples, the captured image data is be stored in computer-readable memory 42. The image data can be image data of viewable zone 36 of camera system 32. The image data can include known objects, such as wings, fuselage, wheels, and other parts of an aircraft. At step 56, at least one image property of the captured image data is determined using one or more processors 40. The at least one image property can be one or more of contrast, white balance, brightness, color saturation, or another image property. At step 58, the one or more image properties is evaluated as to whether it is within an acceptable range using one or more processors 40. If the one or more image properties is within the acceptable range, process 52 returns to step 54. If any one of the one or more image properties is outside the acceptable range, process 52 proceeds to step 60. At step 60, a lighting command is output, configured to adjust light provided by lighting system 38. In one example, a brightness of the image data exceeds the acceptable range. When the brightness exceeds the acceptable range, the lighting command is configured to dim or turn off light provided by light control system 38. In one example, the brightness of the image data falls below the acceptable range. When the brightness falls below the acceptable range the lighting command is configured to turn on, or brighten the light provided by light control system 38. In a further example, a white balance of the image data exceeds the acceptable range. When the white balance is greater than the acceptable range, the lighting command is configured to decrease a color temperature of the light. In a still further example, the white balance is lower than the acceptable range. When the white balance is lower than the acceptable range, the lighting command is configured to increase a color temperature of the light.

Accordingly, implementing techniques of this disclosure, image lighting optimization using an camera system of an aircraft can determine when light provided by an light control system needs to be adjusted. Using the camera system described herein, lighting can be adjusted based upon on or more image properties of image data captured by the camera system. This allows lighting to only be turned on when needed, using less power and extending the operating life of affected components. It also allows for lighting to be adjusted to an optimum level for better picture quality rather than simply having an on or off condition.

### Discussion of Possible Embodiments

The following are non-exclusive descriptions of possible embodiments of the present invention.

A camera system of an aircraft, wherein the aircraft can include a lighting system, the camera system can comprise an image sensor configured to capture image data; and one or more processors can be configured to determine at least one image property of the captured image data; evaluate whether the at least one image property is within an acceptable range; and output, in response to the at least one image property being outside the acceptable range, a lighting command configured to adjust light provided by the lighting system of the aircraft.

The camera system of an aircraft of the preceding paragraph can optionally include, additionally and/or alternatively, any one or more of the following features, configurations and/or additional components:

The at least one image property can be at least one of brightness, white balance, and color saturation.

The lighting command can be configured to adjust the light to be brighter when the at least one image property is less than the acceptable range; and the lighting command can be configured to adjust the light to be dimmer when the at least one image property is greater than the acceptable range.

The at least one image property can be white balance; the lighting command can be configured to increase a color temperature of the light when the at least one image property is less than the acceptable range; and the lighting command can be configured to decrease the color temperature of the light when the at least one image property is greater than the acceptable range.

The one or more processors can be further configured to receive a parameter indicating a color temperature of the light provided by the lighting system of the aircraft; and adjust the image sensor based upon the received parameter.

The image sensor can be configured to capture image data of a viewable zone including a front wheel and a fuselage of the aircraft.

The lighting command can be configured to turn the light provided by the lighting system off in response to the at least one image property being greater than the acceptable range.

The one or more processors can be further configured to receive a first parameter indicating a brightness of the light provided by the lighting system of the aircraft; and receive a second parameter indicating a brightness range of the light provided by the lighting system of the aircraft.

The one or more processors can be configured to adjust the image sensor based on the first received parameter.

The one or more processors can be configured to adjust the lighting command based upon the first and second received parameter.

A method comprising capturing image data using an image sensor of an camera system of an aircraft; determining, by one or more processors of the camera system, at least one image property of the captured image data; evaluating, by the one or more processors, whether the at least one image property is outside an acceptable range; and outputting, in response to determining that the at least one image property is outside the acceptable range, a lighting command configured to adjust light provided by a lighting system of the aircraft.

The method of the preceding paragraph can optionally include, additionally and/or alternatively, any one or more of the following features, configurations and/or additional components:

The at least one image property can be at least one of brightness, white balance, and color saturation.

The lighting command can be configured to adjust the light to be brighter when the at least one image property is less than the acceptable range; and the lighting command can be configured to adjust the light to be dimmer when the at least one image property is greater than the acceptable range.

The at least one image property can be white balance; the lighting command can be configured to increase a color temperature of the light when the at least one image property is less than the acceptable range; and the lighting command can be configured to decrease the color temperature of the light when the at least one image property is greater than the acceptable range.

Receiving, by the one or more processors, a parameter indicating a color temperature of the light provided by the lighting system of the aircraft; and adjusting, by the one or more processors, the image sensor based upon the received parameter.

The image sensor can be configured to capture image data of a viewable zone including a front wheel and a fuselage of the aircraft.

The lighting command can be configured to turn the light provided by the lighting system off in response to the at least one image property being greater than the acceptable range.

Receiving a first parameter indicating a brightness of the light provided by the lighting system of the aircraft; and receiving a second parameter indicating a brightness range of the light provided by the lighting system of the aircraft.

Adjusting the image sensor can be based on the first received parameter.

Adjusting the lighting command can be based upon the first and second received parameter.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A camera system of an aircraft, wherein the aircraft includes a lighting system, the camera system comprising:
an image sensor configured to capture image data; and
one or more processors configured to:
determine at least one image property of the captured image data;
evaluate whether the at least one image property is within an acceptable range; and
output, in response to the at least one image property being outside the acceptable range, a lighting command configured to adjust light provided by the lighting system of the aircraft.

2. The system of claim 1, wherein the at least one image property is at least one of brightness, white balance, and color saturation.

3. The system of claim 1 or 2, wherein the lighting command is configured to adjust the light to be brighter when the at least one image property is less than the acceptable range; and
wherein the lighting command is configured to adjust the light to be dimmer when the at least one image property is greater than the acceptable range.

4. The system of claim 1, 2 or 3, wherein the at least one image property is white balance;
wherein the lighting command is configured to increase a color temperature of the light when the at least one image property is less than the acceptable range; and
wherein the lighting command is configured to decrease the color temperature of the light when the at least one image property is greater than the acceptable range.

5. The system of any preceding claim, wherein the one or more processors are further configured to:
receive a parameter indicating a color temperature of the light provided by the lighting system of the aircraft; and
adjust the image sensor based upon the received parameter.

6. The system of any preceding claim, wherein the image sensor is configured to capture image data of a viewable zone including a front wheel and a fuselage of the aircraft.

7. The system of any preceding claim, wherein the lighting command is configured to turn the light provided by the lighting system off in response to the at least one image property being greater than the acceptable range.

8. The system of any preceding claim, wherein the one or more processors are further configured to:
receive a first parameter indicating a brightness of the light provided by the lighting system of the aircraft; and
receive a second parameter indicating a brightness range of the light provided by the lighting system of the aircraft.

9. The system of claim 8, wherein the one or more processors are configured to adjust the image sensor based on the first received parameter.

10. The system of claim 8, wherein the one or more processors is configured to adjust the lighting command based upon the first and second received parameter.

11. A method comprising:
capturing image data using an image sensor of an camera system of an aircraft;
determining, by one or more processors of the camera system, at least one image property of the captured image data;
evaluating, by the one or more processors, whether the at least one image property is outside an acceptable range; and
outputting, in response to determining that the at least one image property is outside the acceptable range, a lighting command configured to adjust light provided by a lighting system of the aircraft.

12. The method of claim 11, wherein the at least one image property is at least one of brightness, white balance, and color saturation.

13. The method of claim 11 or 12, wherein the lighting command is configured to adjust the light to be brighter when the at least one image property is less than the acceptable range; and
wherein the lighting command is configured to adjust the light to be dimmer when the at least one image property is greater than the acceptable range.

14. The method of claim 11, 12 or 13, wherein the at least one image property is white balance;
wherein the lighting command is configured to increase a color temperature of the light when the at least one image property is less than the acceptable range; and
wherein the lighting command is configured to decrease the color temperature of the light when the at least one image property is greater than the acceptable range.

15. The method of any one of claims 11-14, further comprising:
receiving, by the one or more processors, a parameter indicating a color temperature of the light provided by the lighting system of the aircraft; and
adjusting, by the one or more processors, the image sensor based upon the received parameter.
